# EUROPEAN PATENT APPLICATION

(11) **EP 2 302 963 A1**
(43) Date of publication of application: **30.03.2011**
(21) Application number: 08791050.1
(22) Date of filing: 10.07.2008
(51) Int. Cl.: H04W 16/00, H04W 88/02, H04W 4/00

(54) **RADIO CONTROLLER, MOBILE COMMUNICATION SYSTEM, BASE STATION, MOBILE COMMUNICATION METHOD, AND MOBILE COMMUNICATION PROGRAM**

(71) Applicant: Fujitsu Limited, Kawasaki-shi, Kanagawa 211-8588 (JP)
(72) Inventor: TOMITA, Tetsuo, Kawasaki-shi Kanagawa 211-8588 (JP); SONOBE, Takashi, Kawasaki-shi Kanagawa 211-8588 (JP)
(74) Representative: Fenlon, Christine Lesley
(86) International application number: PCT/JP2008/062502
(87) International publication number: WO 2010/004639

(57) **Abstract**

A radio controller (10) performs call connection when a connection request is sent from a UE (30) that exists in a macrocell accommodated by a macrocell base station (20b). Thereafter, when the radio controller (10) receives the connection request from the UE (30) that exists in the macrocell accommodated by the macrocell base station (20b), the radio controller (10) searches for a femtocell that is adjacent to or overlaps the macrocell in which the UE (30) exists and a femto base station (20a) that accommodates the femtocell. The radio controller (10) instructs the searched femto base station to resume. The radio controller (10) then instructs the UE (30) to be handed over to the femtocell.

## Description

### TECHNICAL FIELD

The present invention relates to a radio controller, a mobile communication system, a base station, a mobile communication method, and a mobile communication program for handing over a mobile device.

### BACKGROUND ART

Base stations referred to as "femto base station" have been known in recent years. An example of femto base stations includes a base station that covers a femtocell with a range (several to several tens of meters) narrower than that of conventional macrocells (with a radius of 1 to several kilometers). The femto base station is used to handle blind areas (for example, above the ground and underground) and to provide services to users in specified areas (for example, homes, offices, and facilities).

Such a femto base station can cover areas closely even in environments that radio waves hardly reach places such as in buildings. Even when an area is narrow, by placing more base stations, the number of mobile phones per cell is reduced, so that the mobile phones can be easily connected and thus the backbone of providing services can be reinforced.

Development of the femto base station and introduction thereof have actually started in domestic and foreign manufacturers and mobile phone providers. Further, industry trends such as establishment of an industry group (the Femto Forum) and taking femto base stations into standards (for example, the 3GPP Home eNodeB specification) become increasingly active.

There has been known a technique of adding a function of shifting from a normal mode to a power saving mode and stopping output of radio waves for ecology and energy saving in ordinary base stations (hereinafter, "macrocell base stations") and femto base stations (see Patent Documents 1 and 2).

However, because it is a communication infrastructure, macrocell base stations cannot be shut down, and because a large number of unspecified users use them, suppressing processing of radio base stations for reduction of power consumption cannot be allowed. Under such circumstances, the function of shifting from a normal mode to a power saving mode is not added to macrocell base stations.

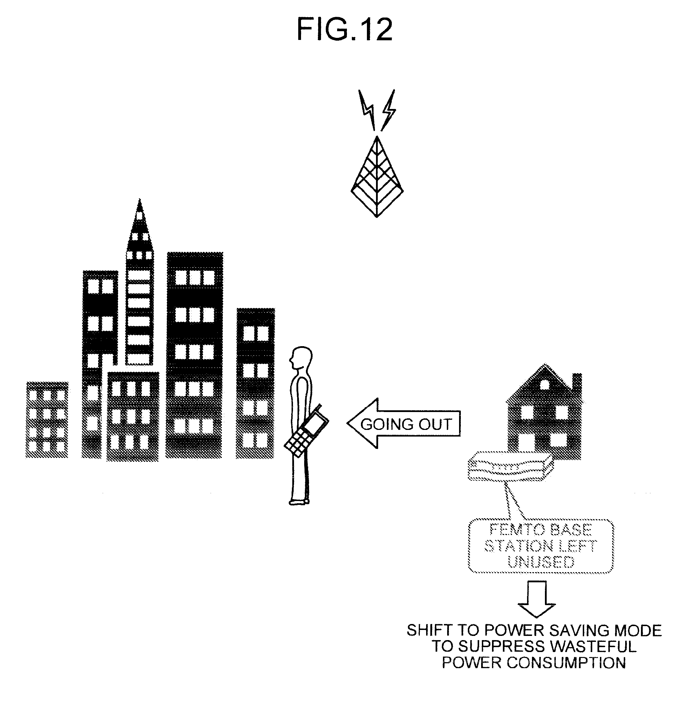

Meanwhile, when a femto base station where areas and users are specified continues to be unused (for example, when there is no user who accesses the station), it is possible that the station can shift to a power saving mode by suppressing processing of the radio base station (see FIG. 12). Therefore, it is thought that a function of shifting to a power saving mode can be added to femto base stations.

Patent Document 1: Japanese Laid-open Patent Publication No. 2007-274208
Patent Document 2: Japanese Laid-open Patent Publication No. 2002-158609

### DISCLOSURE OF INVENTION

### PROBLEM TO BE SOLVED BY THE INVENTION

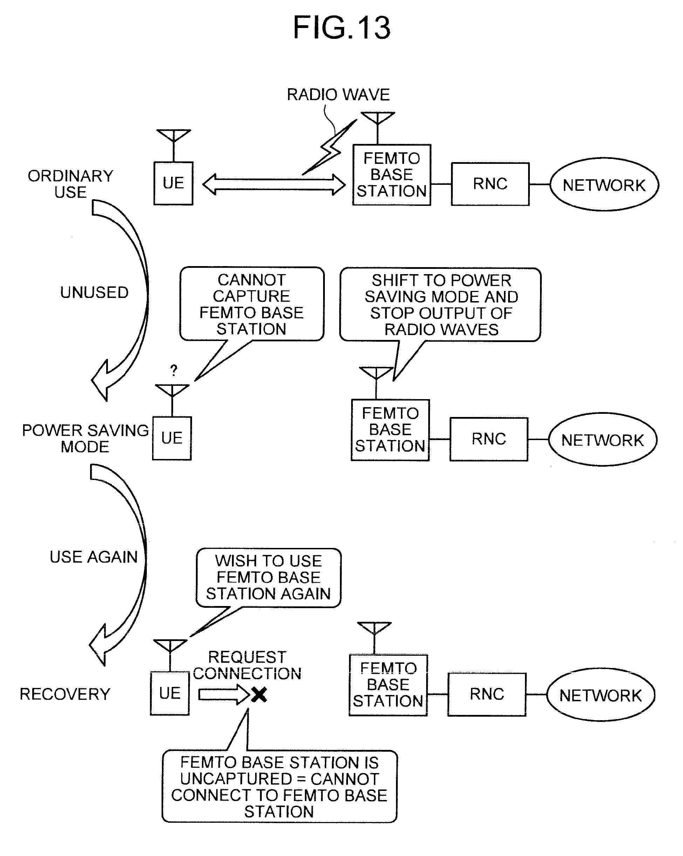

However, in the above technique of shifting the femto base station to a power saving mode, when the femto base station shifts to the power saving mode and stops output of radio waves, a mobile device cannot capture the femto base station and communicate with it (see FIG. 13). As a result, the femto base station in the power saving mode cannot be recovered properly.

Therefore, an object of the present invention is to recover a femto base station in a power saving mode properly.

### MEANS FOR SOLVING PROBLEM

To solve the problem and achieve the object, the controller searches for a femtocell that is adjacent to or overlaps a macrocell connected to a mobile device and for a femto base station that forms the femtocell. The controller has requirements that instructs the femto base station found to resume, and then instructs the mobile device to be handed over to the femtocell found.

### EFFECT OF THE INVENTION

According to the present invention, it is possible to recover a femto base station in a power saving mode properly.

### BRIEF DESCRIPTION OF DRAWINGS

FIG. 1 is a block diagram of a configuration of a radio controller according to a first embodiment.
FIG. 2 is an explanatory diagram of an example of a mobile communication system.
FIG. 3 is an explanatory diagram of an example of a macrocell-information storage unit.
FIG. 4 is an explanatory diagram of an example of an adjacent-cell-information storage unit.
FIG. 5 is an explanatory diagram of an example of a femto-base-station-information storage unit.
FIG. 6 is an explanatory diagram of an example of an access-right-information storage unit.
FIG. 7 is an explanatory diagram of a reconnecting process to a femto base station in a power saving mode.
FIG. 8 is a sequence diagram of a processing flow of the radio controller according to the first embodiment.
FIG. 9 is a sequence diagram of a processing flow of the radio controller according to the first embodiment.
FIG. 10 is an explanatory diagram of another example of the mobile communication system.
FIG. 11 depicts a computer that executes a mobile communication program.
FIG. 12 is an explanatory diagram of a conventional technique.
FIG. 13 is an explanatory diagram of a conventional technique.

### EXPLANATIONS OF LETTERS OR NUMERALS

- 10: Radio controller
- 11: Control unit
- 11a: Call connecting unit
- 11b: Femto-base-station searching unit
- 11c: Access-permission determining unit
- 11d: Resume instructing unit
- 11e: Handover instructing unit
- 12: Storage unit
- 12a: Macrocell-information storage unit
- 12b: Adjacent-cell-information storage unit
- 12c: Femto-base-station-information storage unit
- 12d: Access-right-information storage unit
- 20a: Femto base station
- 20b: Base station
- 30: UE
- 40: Network

### BEST MODE(S) FOR CARRYING OUT THE INVENTION

Exemplary embodiments of a radio controller, a mobile communication system, a base station, a mobile communication method, and a mobile communication program according to the present invention will be explained below in detail with reference to the accompanying drawings.

### First Embodiment

In the following embodiments, a configuration and a processing flow of a radio controller according to a first embodiment are described in this order and effects of the first embodiment are then described.

### Configuration of radio controller

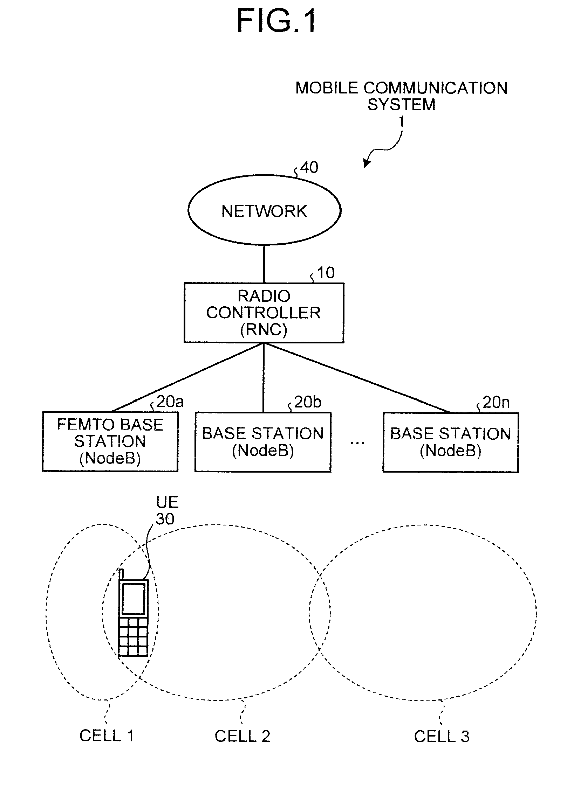

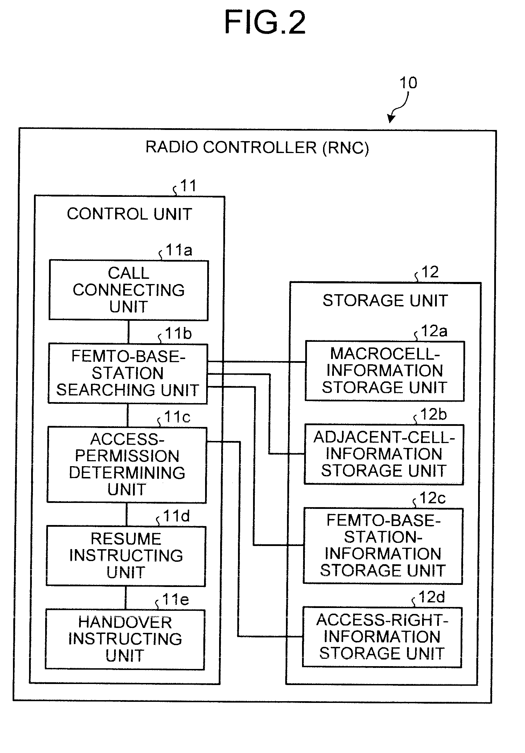

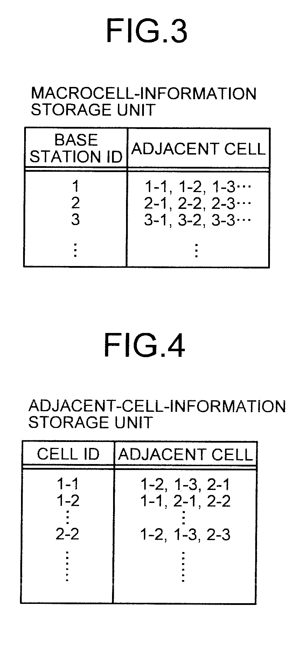

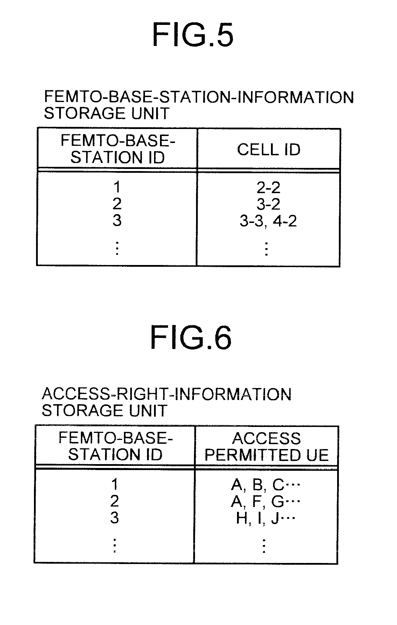

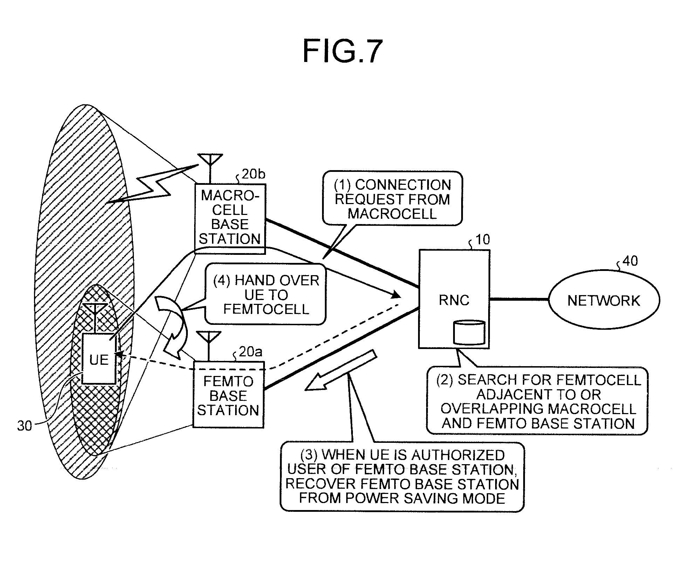

A configuration of a radio controller 10 is explained first with reference to FIGS. 1 to 7. FIG. 1 is a block diagram of the configuration of the radio controller according to the first embodiment. FIG. 2 is an explanatory diagram of an example of a mobile communication system. FIG. 3 is an explanatory diagram of an example of a macrocell-information storage unit. FIG. 4 is an explanatory diagram of an example of an adjacent-cell-information storage unit. FIG. 5 is an explanatory diagram of an example of a femto-base-station-information storage unit. FIG. 6 is an explanatory diagram of an example of an access-right-information storage unit. FIG. 7 is an explanatory diagram of a reconnecting process to a femto base station in a power saving mode.

As illustrated in FIG. 1, a mobile communication system 1 including the radio controller 10 has the radio controller (RNC (Radio Network Controller)) 10, NodeBs (a femto base station device and base stations) 20a to 20n, a UE (User Equipment, a mobile device) 30, and a network 40.

The radio controller 10 is a communication controller that manages a plurality of NodeBs 20a to 20n and performs various controls required to realize radio communication. The NodeBs 20a to 20n are communication devices that accommodate cells, which are radio communication regions with a predetermined extent, and provide a radio link to the UEs 30 placed in the respective cells that the respective stations accommodate. The femto base station 20a among the NodeBs 20 has a cell narrower than that of the base station 20b for illustration.

When the femto base station (NodeB) 20a continues to be unused (for example, when there is no user who accesses the station 20a), it shifts to a power saving mode where processing of a radio base station is suppressed.

The UE 30 is a mobile radio communication device such as a mobile phone. The network 40 is a large-capacity wide area network. The UE 30 communicates with other mobile devices via any of the NodeBs 20a to 20n that accommodate a cell the UE 30 exists.

For example, when the UE 30 is in a cell 1 accommodated by the NodeB 20a, a radio link is set between the UE 30 and the NodeB 20a, and the UE 30 communicates with other UEs through the set radio link.

Further, when the UE 30 cannot capture the femto base station (NodeB) 20a that has shifted to a power saving mode and stopped output of radio waves, the UE 30 captures another base station (hereinafter, "macrocell base station") 20b that is adjacent to or overlaps the cell controlled by the femto base station.

The configuration of the radio controller 10 is explained in detail. As illustrated in FIG. 2, the radio controller 10 includes a control unit 11 and a storage unit 12. Processes of these units are described below.

The storage unit 12 stores therein data and programs required for various processes performed by the control unit 11, and particularly includes a macrocell-information storage unit 12a, an adjacent-cell-information storage unit 12b, a femto-base-station-information storage unit 12c, and an access-right-information storage unit 12d.

The macrocell-information storage unit 12a stores therein information of cells accommodated by the respective macrocell base stations as macrocell information. Specifically, as exemplified in FIG. 3, the macrocell-information storage unit 12a associates "base station ID" that uniquely identifies the macrocell base station with "cell ID" that uniquely identifies a cell accommodated by each macrocell base station, and stores them.

The adjacent-cell-information storage unit 12b stores therein respective cells by associating them with cells adjacent to respective cells. Specifically, as exemplified in FIG. 4, the adjacent-cell-information storage unit 12b associates "cell ID" that uniquely identifies the cell with "adjacent cell" that is a cell ID adjacent to each cell, and stores them.

The femto-base-station-information storage unit 12c stores therein information of cells accommodated by the respective femto base stations as femto-base-station information. Specifically, as exemplified in FIG. 5, the femto-base-station-information storage unit 12c associates "femto-base-station ID" that uniquely identifies the femto base station with "cell ID" that uniquely identifies a cell accommodated by each femto base station, and stores them.

The access-right-information storage unit 12d stores therein information of UEs for which access has been permitted by the respective femto base stations. Specifically, as exemplified in FIG. 6, the access-right-information storage unit 12d associates "femto-base-station ID" that uniquely identifies the femto base station with "access permitted UE" that uniquely identifies the UE for which access has been permitted by each femto base station, and stores them.

The control unit 11 includes internal memories for storing programs having various process procedures specified therein and required data, and performs these various processes by the programs and data. Specifically, the control unit 11 includes a call connecting unit 11a, a femto-base-station searching unit 11b, an access-permission determining unit 11c, a resume instructing unit 11d, and a handover instructing unit 11e.

The call connecting unit 11a performs call connection when a connection request is sent from the UE 30 that exists in the macrocell accommodated by the macrocell base station 20b. Specifically, because the femto base station 20a is in a power saving mode and thus cannot be captured, the UE 30 captures the macrocell base station 20b. When the call connecting unit 11a receives the connection request from the UE 30 that captures the macrocell base station 20b in such a case, the call connecting unit 11a establishes a communication CH between the UE 30 and the radio controller 10 through the macrocell base station 20b to perform call connection.

When a connection request is sent from the UE 30 that exists in the macrocell accommodated by the macrocell base station 20b, the femto-base-station searching unit 11b searches for a femtocell that is adjacent to or overlaps the macrocell in which the UE 30 exists and the femto base station 20a that accommodates that femtocell.

Specifically, the femto-base-station searching unit 11b reads a cell ID (for example, a cell ID "2-2") of the macrocell where the UE 30 that is call connected to the macrocell base station 20b by the call connecting unit 11a exists from the macrocell-information storage unit 12a. The femto-base-station searching unit 11b then reads cell IDs (for example, cell IDs "1-2", "1-3", and "2-3") that are adjacent to the read cell ID from the adjacent-cell-information storage unit 12b.

The femto-base-station searching unit 11b searches for the femto base station ID that cells corresponding to the read cell IDs (the cell IDs "2-2", "1-2", "1-3", and "2-3" in the above example) are determined as a femtocell accommodated by the corresponding base station (for example, a femto base station ID "1" that accommodates a cell with a cell ID "2-2") from the femto-base-station-information storage unit 12c. When femtocells that are adjacent to or overlap the macrocell in which the UE 30 exists are not found, subsequent processes are not performed and the communication is continued in the macrocell or disconnected.

The access-permission determining unit 11c determines whether the UE 30 that has sent a connection request is a UE for which access to the searched femto base station 20a has been permitted. Specifically, the access-permission determining unit 11c reads identifiers of the UE for which access to the femto base station ID (for example, "1") searched by the femto-base-station searching unit 11b has been permitted (for example, "A", "B", and "C") from the access-right-information storage unit 12d.

The access-permission determining unit 11c determines whether the identifier of the UE 30 that is call connected by the call connecting unit 11a (for example, "A") exists among the read identifiers of the UE (for example, "A", "B", and "C"). When the identifier of the UE 30 that is call connected by the call connecting unit 11a exists, the access-permission determining unit 11c informs the resume instructing unit 11d that the corresponding UE has been permitted to access to the femto base station 20a.

When the identifier of the UE 30 that is call connected by the call connecting unit 11a does not exist, the access-permission determining unit 11c does not perform subsequent processes and continues the communication in the macrocell or disconnects the communication. This can be realized sufficiently by a technique equivalent to that of transmitting a terminal identifier and a password for checking at the time of accessing services from ordinary mobile phones.

Regarding processes of determining whether the UE 30 is a UE for which access has been permitted, for example, whether a user is someone who has been permitted to connect to a femto base station is determined as a security check to prevent connection of unspecified users when services are provided to specified users or to specified areas. In a case of handling blind areas, it is not necessary to determine whether a connecting user has a right to access the femto base station because a large number of unspecified users are supposed to use the station.

The resume instructing unit 11d instructs the searched femto base station to resume. Specifically, the resume instructing unit 11d instructs the femto base station searched by the femto-base-station searching unit 11b to resume, that is, to recover from a power saving mode in the case of the UE 30 that has been permitted to connect to the femto base station searched by the femto-base-station searching unit 11b (in the above example, the femto base station ID "1"). When the recovery from the power saving mode is controlled (resume is instructed) remotely, this can be realized sufficiently by a technique equivalent to that of instructing a personal computer, which has been shut down, to wake up through a LAN.

The handover instructing unit 11e instructs the UE 30 to be handed over to a femtocell. Specifically, when the handover instructing unit 11e receives a notification that the resume has been completed from the femto base station 20a, the handover instructing unit 11e instructs that the UE 30 is handed over from the currently connected macrocell to the femtocell with the cell ID searched by the femto-base-station searching unit 11b (in the above example, the cell ID "2-2").

That is, as the result of handing over the UE 30 to the femtocell controlled by a femto base station that has recovered from a power saving mode, the femto base station in the power saving mode can be recovered properly when a connection request is sent from the mobile device while power consumption of the femto base station is suppressed.

An entire processing flow of the radio controller 10 that instructs handing over a UE to a femtocell controlled by a femto base station recovered from a power saving mode is described with reference to FIG. 7. As illustrated in FIG. 7, when the radio controller (RNC) 10 receives a connection request from the UE 30 that captures the macrocell base station 20b (see (1) in FIG. 7), the radio controller 10 establishes a communication CH between the UE 30 and the radio controller 10 through the macrocell base station 20b to perform call connection.

The radio controller 10 then searches for a femtocell that is adjacent to or overlaps a macrocell where the UE 30 that has sent a connection request exists and the femto base station 20a that accommodates the femtocell (see (2) in FIG. 7). The radio controller 10 then determines whether the UE 30 having sent a connection request is a UE for which access to the searched femto base station 20a has been permitted.

As a result, when it is determined that the UE 30 is a UE for which the access has been permitted, the radio controller 10 recovers the femto base station 20a from a power saving mode (see (3) in FIG. 7). The radio controller 10 causes the UE 30 to be handed over from the currently connected macrocell to the femtocell with the searched cell ID (see (4) in FIG. 7).

### Processes performed by radio controller

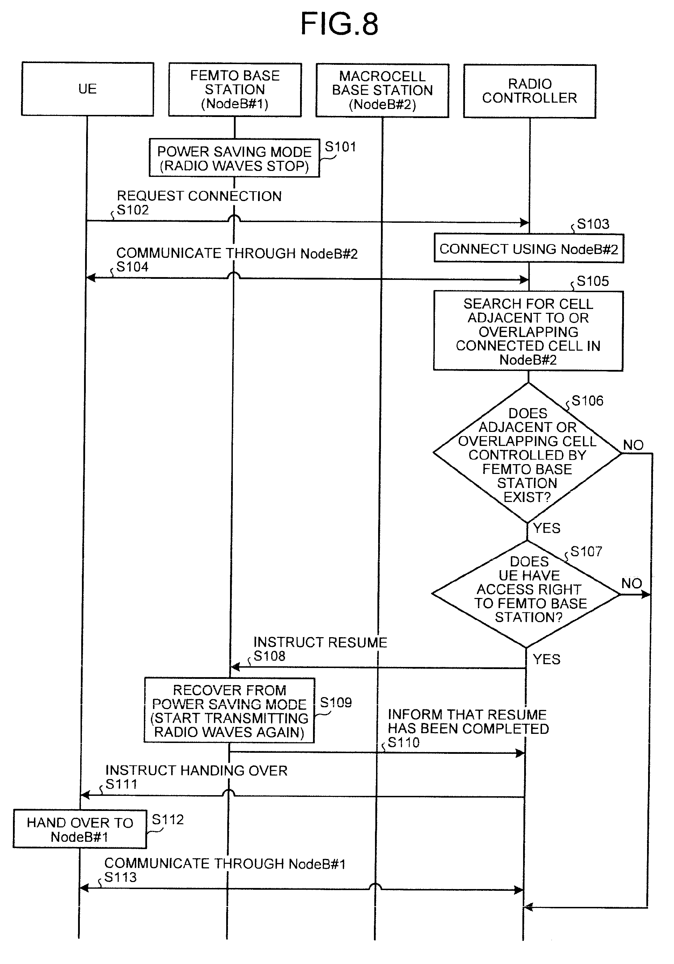

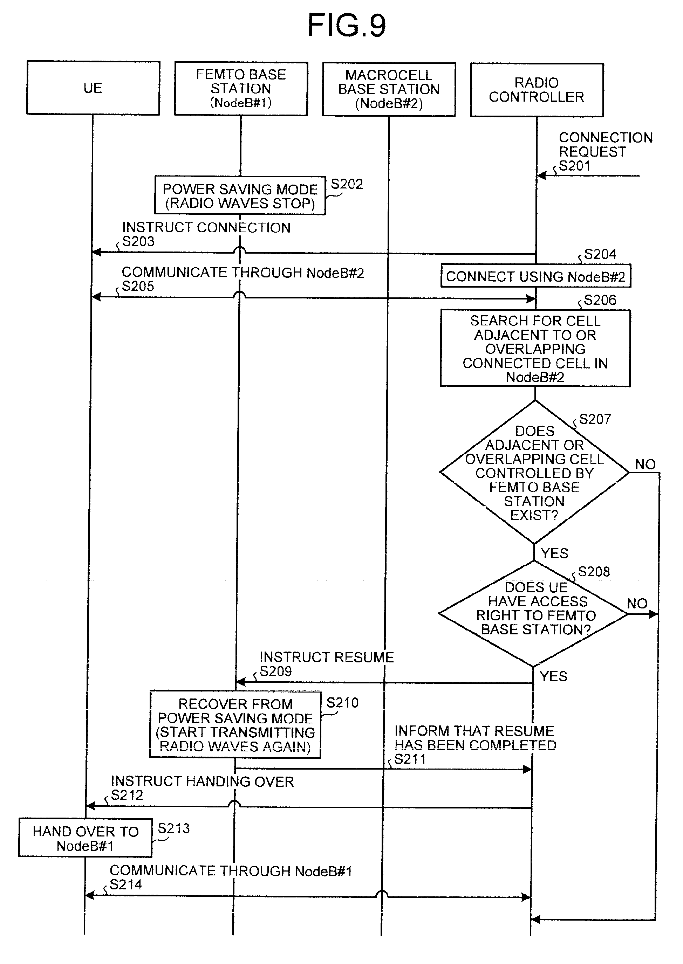

Processes performed by the radio controller 10 of the first embodiment are described with reference to FIGS. 8 and 9. FIGS. 8 and 9 are sequence diagrams of a processing flow of the radio controller according to the first embodiment.

As illustrated in FIG. 8, because the femto base station 20a shifts to a power saving mode and stops output of radio waves (Step S101), the UE 30 cannot capture the femto base station 20a. The UE 30 thus captures the macrocell base station 20b and sends a connection request to the radio controller 10 (Step S102).

When the radio controller 10 receives the connection request from the UE 30 that has captured the macrocell base station 20b, the radio controller 10 establishes a communication CH between the UE 30 and the radio controller 10 through the macrocell base station 20b to perform call connection (Step S103). The UE 30 then performs communication through the macrocell base station 20b (Step S104).

The radio controller 10 then searches for a femtocell that is adjacent to or overlaps the macrocell connected to the UE 30 and the femto base station 20a that accommodates that femtocell (Step S105). The radio controller 10 determines whether the femtocell that is adjacent to or overlaps the macrocell connected to the UE 30 exists (Step S106).

As a result of determination, when the radio controller 10 determines that the femtocell that is adjacent to or overlaps the macrocell connected to the UE 30 does not exist (NO at Step S106), the radio controller 10 does not perform subsequent processes and continues the communication in the macrocell or disconnects the communication.

When the radio controller 10 determines that the femtocell that is adjacent to or overlaps the macrocell connected to the UE 30 exists (YES at Step S106), the radio controller 10 then determines whether the UE 30 is a UE for which access to the femto base station 20a that accommodates the searched femtocell has been permitted (Step S107).

As a result of determination, when the radio controller 10 determines that the UE 30 is not permitted to access to the femto base station 20a (NO at Step S107), the radio controller 10 does not perform subsequent processes and continues the communication in that macrocell or disconnects the communication.

When the radio controller 10 determines that the UE 30 has been permitted to access to the femto base station 20a (YES at Step S107), the radio controller 10 instructs the searched femto base station to resume (Step S108). The femto base station 20a having received the resume instruction recovers from a power saving mode and starts to transmit radio waves again (Step S109). The femto base station 20a informs the radio controller 10 that the resume has been completed (Step S110).

Subsequently, when the radio controller 10 receives the notification that the resume has been completed from the femto base station 20a, the radio controller 10 instructs the UE 30 to be handed over from the currently connected macrocell to the searched femtocell (Step S111). The UE 30 instructed to be handed over is handed over to the femtocell accommodated by the femto base station 20a (Step S112) and performs communication via the femto base station 20a (Step S113).

While a case of starting processing of the radio controller 10 when a connection request is sent from the UE 30 has been described in FIG. 8, as illustrated in FIG. 9, the processing of the radio controller 10 can be started when a connection request is sent to the UE 30.

That is, as illustrated in FIG. 9, when the radio controller 10 receives the connection request to the UE 30 (Step S201), when the femto base station 20a shifts to a power saving mode and stops output of radio waves (Step S202), the radio controller 10 instructs the UE 30 to connect to the macrocell base station 20b (Step S203).

Thereafter, the radio controller 10 performs processing that is identical to that of FIG. 8, and hands over the UE 30 to the femtocell that is controlled by the femto base station 20a, which has recovered from the power saving mode (Steps S204 to S214).

### Effects of first embodiment

As described above, the radio controller 10 hands over the UE 30 to the femtocell that is controlled by the femto base station 20a, which has recovered from a power saving mode. As a result, the femto base station in the power saving mode can be recovered properly while power consumption of the femto base station 20a is suppressed.

According to the first embodiment, it is determined whether a UE is the UE 30 for which access to the searched femto base station 20a has been permitted, and when it is determined that the UE is the UE 30 for which the access to the femto base station 20a has been permitted, the femto base station 20a is instructed to resume. Accordingly, a security check to prevent unspecified users from connecting to the femto base station 20a can be performed.

In the first embodiment, when the femtocell that is adjacent to or overlaps the connected macrocell and the femto base station that accommodates that femtocell are not found, communication continues in the macrocell or the communication is disconnected. Therefore, even when the femtocell that is adjacent to or overlaps the macrocell connected to the UE 30 and the femto base station are not found, the communication can continue or be disconnected.

### Second Embodiment

While an embodiment of the present invention is described, the present invention can be carried out in various modes other than the embodiment described above. Another embodiment included in the present invention is described as a second embodiment.

### (1) Mobile communication system

While the first embodiment has described a case of applying the present invention to a mobile communication system in which a radio controller controls radio communication between a base station and a UE, the present invention is not limited thereto and can be also applied to a mobile communication system configured by a base station and a UE.

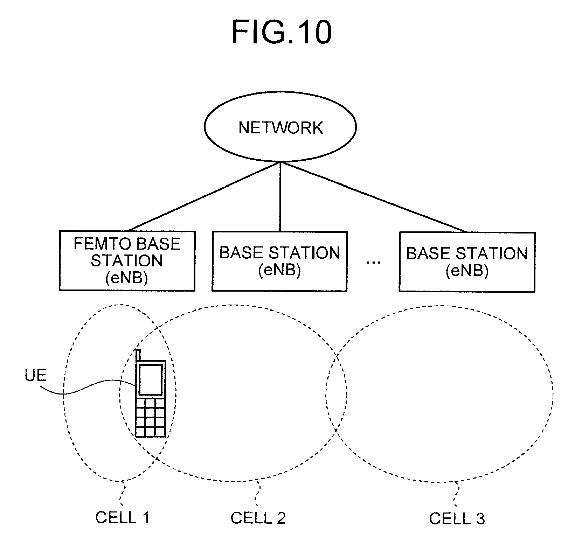

Specifically, as exemplified in FIG. 10, in a mobile communication system that does not include a radio controller and is configured by base stations eNB (enhanced NodeB) and a UE, the present invention is applied to each of the base stations eNB.

### (2) System configuration or the like

Respective constituent elements of the devices illustrated in the drawings are functionally conceptual, and physically the same configuration is not always necessary. That is, the specific mode of distribution and integration of each device is not limited to the ones illustrated in the drawings, and all or a part thereof can be functionally or physically distributed or integrated in an optional unit according to various kinds of load and a status of use. For example, the call connecting unit 11a and the femto-base-station searching unit 11b can be integrated. Further, all or an optional part of various processing functions performed by each device can be realized by a CPU or a program analyzed and executed by the CPU, or can be realized as hardware by the wired logic.

Among respective processes described in the present embodiment, all or a part of the processes explained as being performed automatically can be performed manually, or all or a part of the processes explained as being performed manually can be performed automatically by a known method. In addition, information including process procedures, control procedures, specific names, and various kinds of data and parameters mentioned in the present specification and the drawings can be arbitrarily changed unless otherwise specified.

### (3) Program

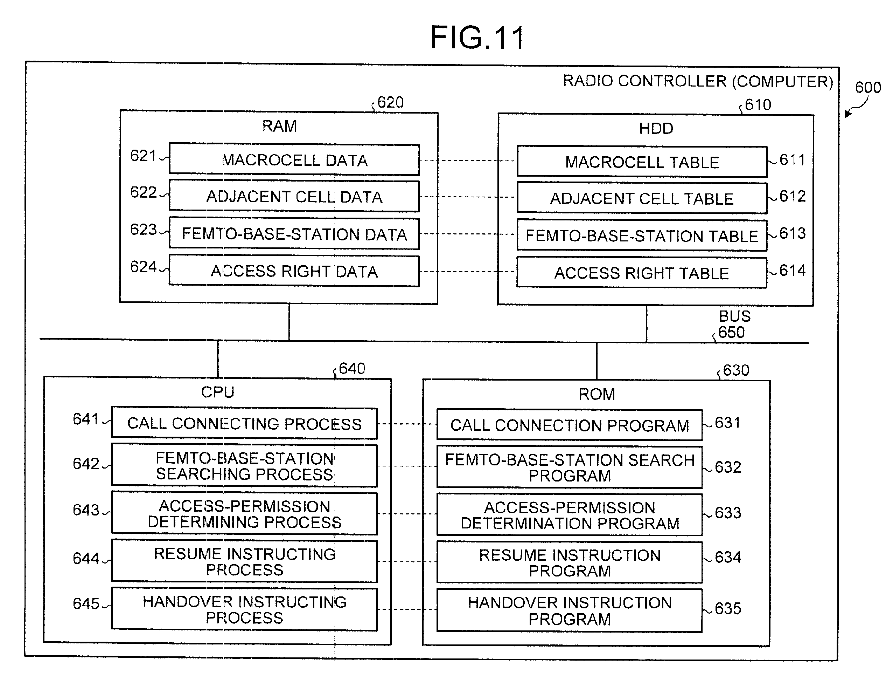

Various processes described in the above embodiments can be achieved by executing programs prepared in advance on a computer. An example of a computer that executes a program having the same function as that of the above embodiments is described with reference to FIG. 11. FIG. 11 depicts a computer that executes a mobile communication program.

As illustrated in FIG. 11, a computer 600 serving as a radio controller is configured by connecting an HDD 610, a RAM 620, a ROM 630, and a CPU 640 via a bus 650.

A mobile communication program that exhibits same functions as those of the above embodiments, that is, a call connection program 631, a femto-base-station search program 632, an access-permission determination program 633, a resume instruction program 634, and a handover instruction program 635 are stored in the ROM 630 in advance as illustrated in FIG. 11. These programs 631 to 635 can be properly integrated or distributed like the constituent elements of the radio controller illustrated in FIG. 2.

By the CPU 640 reading the programs 631 to 635 from the ROM 630 and executing them, as illustrated in FIG. 11, these programs 631 to 635 function as a call connecting process 641, a femto-base-station searching process 642, an access-permission determining process 643, a resume instructing process 644, and a handover instructing process 645, respectively. These processes 641 to 645 correspond to the call connecting unit 11a, the femto-base-station searching unit 11b, the access-permission determining unit 11c, the resume instructing unit 11d, and the handover instructing unit 11e illustrated in FIG. 2, respectively.

Further, the HDD 610 is provided with a macrocell table 611, an adjacent cell table 612, a femto-base-station table 613, and an access right table 614 as illustrated in FIG. 11. The macrocell table 611, the adjacent cell table 612, the femto-base-station table 613, and the access right table 614 correspond to the macrocell-information storage unit 12a, the adjacent-cell-information storage unit 12b, the femto-base-station-information storage unit 12c, and the access-right-information storage unit 12d illustrated in FIG. 2, respectively.

The CPU 640 registers data in the macrocell table 611, the adjacent cell table 612, the femto-base-station table 613, and the access right table 614, reads macrocell data 621, adjacent cell data 622, femto-base-station data 623, and access right data 624 from the macrocell table 611, the adjacent cell table 612, the femto-base-station table 613, and the access right table 614 to store the data in the RAM 620, and performs processing to manage information based on the macrocell data 621, the adjacent cell data 622, the femto-base-station data 623, and the access right 624 stored in the RAM 620.

## Claims

1. A radio controller comprising:
a connecting unit that connects a mobile device that exists in a cell formed by a base station to the cell when a connection request is sent from the mobile device;
a femto-base-station searching unit that searches for a femto base station that forms a femtocell that is adjacent to or overlaps the cell connected by the connecting unit;
a resume instructing unit that instructs the femto base station found by the femto-base-station searching unit to resume; and
a handover instructing unit that instructs the mobile device to be handed over to the femtocell found by the femto-base-station searching unit.

2. The radio controller according to claim 1, further comprising an access determining unit that determines whether the mobile device connected by the connecting unit is a mobile device for which access to the femto base station found by the femto-base-station searching unit has been permitted, wherein
the resume instructing unit instructs the femto base station to resume when it is determined that access to the femto base station has been permitted by the access determining unit.

3. The radio controller according to claim 1 or 2,
wherein the femto-base-station searching unit continues communication in the cell or disconnects communication when the femtocell that is adjacent to or overlaps the cell connected by the connecting unit and the femto base station that forms the corresponding femtocell are not found.

4. A mobile communication system comprising a radio controller that controls radio communication between a base station and a mobile device, wherein
the radio controller includes
a connecting unit that connects a mobile device that exists in a cell formed by the base station to the cell when a connection request is sent from the mobile device;
a femto-base-station searching unit that searches for a femto base station that forms a femtocell that is adjacent to or overlaps the cell connected by the connecting unit;
a resume instructing unit that instructs the femto base station found by the femto-base-station searching unit to resume; and
a handover instructing unit that instructs the mobile device to be handed over to the femtocell found by the femto-base-station searching unit.

5. The mobile communication system according to claim 4,
wherein the radio controller further includes an access determining unit that determines whether the mobile device connected by the connecting unit is a mobile device for which access to the femto base station found by the femto base-station searching unit has been permitted, and
the resume instructing unit instructs the femto base station to resume when it is determined that access to the femto base station has been permitted by the access determining unit.

6. The mobile communication system according to claim 4 or 5, wherein the femto-base-station searching unit continues communication in the cell or disconnects communication when the femtocell that is adjacent to or overlaps the cell connected by the connecting unit and the femto base station that forms the corresponding femtocell are not found.

7. A base station comprising:
a connecting unit that connects a mobile device that exists in a cell formed by a base station to the cell when a connection request is sent from the mobile device;
a femto-base-station searching unit that searches for a femto base station that forms a femtocell that is adjacent to or overlaps the cell connected by the connecting unit;
a resume instructing unit that instructs the femto base station found by the femto-base-station searching unit to resume; and
a handover instructing unit that instructs the mobile device to be handed over to the femtocell found by the femto-base-station searching unit.

8. The base station according to claim 7, further comprising an access determining unit that determines whether the mobile device connected by the connecting unit is a mobile device for which access to the femto base station found by the femto-base-station searching unit has been permitted, wherein
the resume instructing unit instructs the femto base station to resume when it is determined that access to the femto base station has been permitted by the access determining unit.

9. The base station according to claim 7 or 8, wherein the femto-base-station searching unit continues communication in the cell or disconnects communication when the femtocell that is adjacent to or overlaps the cell connected by the connecting unit and the femto base station that forms the corresponding femtocell are not found.

10. A mobile communication method comprising:
a connecting step of connecting a mobile device that exists in a cell formed by a base station to the cell when a connection request is sent from the mobile device;
a femto-base-station searching step of searching for a femto base station that forms a femtocell that is adjacent to or overlaps the cell connected at the connecting step;
a resume instructing step of instructing the femto base station found at the femto-base-station searching step to resume; and
a handover instructing step of instructing the mobile device to be handed over to the femtocell found at the femto-base-station searching step.

11. The mobile communication method according to claim 10, further comprising an access determining step of determining whether the mobile device connected by the connecting unit is a mobile device for which access to the femto base station found at the femto-base-station searching step has been permitted, wherein
the resume instructing step includes instructing the femto base station to resume when it is determined that access to the femto base station has been permitted at the access determining step.

12. The mobile communication method according to claim 10 or 11, wherein the femto-base-station searching step includes continuing communication in the cell or disconnecting communication when the femtocell that is adjacent to or overlaps the cell connected at the connecting step and the femto base station that forms the corresponding femtocell are not found.

13. A mobile communication program causing a computer to execute:
a connecting step of connecting a mobile device that exists in a cell formed by a base station to the cell when a connection request is sent from the mobile device;
a femto-base-station searching step of searching for a femto base station that forms a femtocell that is adjacent to or overlaps the cell connected at the connecting step;
a resume instructing step of instructing the femto base station found at the femto-base-station searching step to resume; and
a handover instructing step of instructing the mobile device to be handed over to the femtocell found at the femto-base-station searching step.

14. The mobile communication program according to claim 13, further casing the computer to execute an access determining step of determining whether the mobile device connected by the connecting unit is a mobile device for which access to the femto base station found at the femto-base-station searching step has been permitted, wherein
the resume instructing step includes instructing the femto base station to resume when it is determined that access to the femto base station has been permitted at the access determining step.

15. The mobile communication program according to claim 13 or 14, wherein the femto-base-station searching step includes continuing communication in the cell or disconnecting communication when the femtocell that is adjacent to or overlaps the cell connected at the connecting step and the femto base station that forms the corresponding femtocell are not found.
